Europäisches Patentamt

European Patent Office

Office européen des brevets

(11) Veröffentlichungsnummer: **0 237 855**
**A2**

(12) **EUROPÄISCHE PATENTANMELDUNG**

(21) Anmeldenummer: 87102860.1

(22) Anmeldetag: 27.02.87

(51) Int. Cl.4: **B01D 1/28** , **A23C 7/02** ,
**B08B 3/00**

(30) Priorität: 19.03.86 DE 3609180

(43) Veröffentlichungstag der Anmeldung:
23.09.87 Patentblatt 87/39

(84) Benannte Vertragsstaaten:
AT BE CH DE FR GB IT LI LU NL SE

(71) Anmelder: **Metzger, Klaus**
**Falkenstrasse 7**
**D-3200 Hildesheim(DE)**

(72) Erfinder: **Metzger, Klaus**
**Falkenstrasse 7**
**D-3200 Hildesheim(DE)**

(74) Vertreter: **Thömen, Uwe, Dipl.-Ing.**
**Patentanwalt U. Thömen Zeppelinstrasse 5**
**D-3000 Hannover(DE)**

(54) Verfahren und Vorrichtung zum intermittierenden Reinigen von Eindampfanlagen.

(57) Verfahren zur intermittierenden Reinigen von indirekt mit Heizdampf beheizten Eindampfanlagen für
Flüssigkeiten, (z.B. Milch), wobei der Belag auf der
Verdampferoberfläche mit einer Reinigungsflüssigkeit entfernt wird, die in die Anlage eingebracht wird.

Es wird die Druck-und/oder Temperaturdifferenz
über eine oder mehrere Verdampferstufen zwischen
der Heizdampfseite und der Verdampfungsseite gemessen, und die Reinigung wird in Abhängigkeit von
der Änderung der Druck-und/oder Temperaturdifferenz automatisch beendet.

FIG. 5

## Verfahren und Vorrichtung zum intermittierenden Reinigen von Eindampfanlagen

Die Erfindung betrifft ein Verfahren zum intermittierenden Reinigen von Eindampfanlagen gemäß dem Oberbegriff des Anspruchs 1. Außerdem befaßt sich die Erfindung mit einer Vorrichtung zur Durchführung des Verfahrens.

Eindampfanlagen werden heute in vielen Bereichen, etwa in der Molkereiwirtschaft, mit Vorteil eingesetzt. Dabei kommen beispielsweise Eindampfanlagen mit Brüdenverdichter (thermischer oder mechanischer Brüdenverdichter) als auch ohne Brüdenverdichter zur Anwendung. Ferner kann auch der sogenannte "organische Rankine-Kreisprozeß" (ORC) mit Kompressoren für das organische Kreislaufmedium eingesetzt werden.

Bei den thermischen Brüdenverdichtern wird mittels eines Treibdampfes (Treibstrom) ein Saugstrom auf einen Gegendruck verdichtet (Aufsatz "Steuerung und Regelung von Dampfstrahlverdichtern", von R. Gösling, Sonderdruck aus "Fette●Seifen●Anstrichmittel●Die Ernährungsindustrie", 1970, Nr. 2, Seiten 64 -67), und beim mechanischen Brüdenverdichter ist ein Elektromotor vorgesehen, der eine Dampfdruckerhöhung erzeugt.

Beim Betrieb der Eindampfanlagen kommt ihrer Reinigung eine entscheidende Bedeutung zu, um eine zuverlässige Arbeitsweise zu erzielen, und zwar sowohl bei einstufigen als auch bei mehrstufigen Eindampfanlagen.

Nach längerer Betriebsdauer setzt sich nämlich auf der Verdampferoberfläche ein Belag ab, der von Zeit zu Zeit mit einem Reinigungsmedium entfernt werden muß. In der Praxis erfolgt der wichtige Vorgang der Reinigung der Eindampfanlagen manuell durch das Betriebspersonal.

Bekanntlich läßt man durch die Verdampferstufe ein Reinigungsmedium auf der Verdampfungsseite strömen, und auf der Heizdampfseite wird Brüden zugeführt, wodurch das Reinigungsmedium aufkonzentriert wird, um den Belag zu entfernen. Bei Eindampfanlagen mit Brüdenverdichter wird dabei der Treibdampfdruck gegenüber dem Normalbetrieb auf einen Wert von etwa 85 % abgesenkt, wobei der Treibdampfdruck dann konstant bleibt.

Nach einer bestimmten Reinigungszeitdauer -in der Praxis nach beispielsweise 2 -3 Stunden -wird der Reinigungsvorgang unterbrochen, und es erfolgt jetzt eine optische Kontrolle durch das Betriebspersonal, ob der Belag auf der Verdampferoberfläche inzwischen vollständig entfernt ist und die Reinigung damit abgeschlossen werden kann, oder ob gegebenenfalls noch ein Restbelag vorhanden ist und der Reinigungsvorgang somit erneut für eine weitere Zeitdauer eingeleitet werden muß. Im Anschluß daran ist eine weitere optische Kontrolle erforderlich.

Ein gravierender Nachteil besteht nun darin, daß die Zeitdauer der Reinigung lediglich auf Erfahrungswerten des Betriebspersonals beruht, denn während des Reinigungsvorganges selbst ist die erwähnte optische Kontrolle nicht möglich.

Dieser Umstand führt in der Praxis dazu, daß die Reinigungszeitdauer sozusagen vorsichtshalber durchweg zu lang vorgegeben wird, um zu erreichen, daß bei der optischen Kontrolle auch tatsächlich die vollständige Entfernung des Belages auf der Verdampferoberfläche festgestellt werden kann. Andernfalls müßte der Reinigungsvorgang nämlich wiederholt werden, und es müßte erneut eine optische Kontrolle vorgenommen werden.

Diese zu lange Vorgabe der Reinigungszeitdauer, die unter dem Gesichtspunkt vorgenommen wird, sich auf der sicheren Seite zu befinden, führt wegen der großzügig bemessenen Reinigungszeiten zu wirtschaftlichen Nachteilen.

Durch eine zu lang bemessene und überflüssige Reinigungszeit geht nämlich nutzbare Betriebszeit der Eindampfanlage verloren. Außerdem werden durch die Beaufsichtigung der übermäßig lange erfolgenden Reinigung sowie durch die optischen Endkontrollen durch das Betriebspersonal unnötig Arbeitskräfte gebunden.

Wenn man die bei den einzelnen Reinigungsvorgängen der Eindampfanlage sich einstellenden "Totzeiten" über die vielfach vorzunehmenden Reinigungsvorgänge summiert, wird der wirtschaftliche Nachteil durch die verlorengegangenen Betriebszeiten ohne weiteres deutlich.

Hier greift die Erfindung ein, der die Aufgabe zugrunde liegt, ein Verfahren zum intermittierenden Reinigen von Eindampfanlagen anzugeben, welches eine zuverlässige Reinigung bei Vermeidung von unnötigen Totzeiten ermöglicht, und welches es gestattet, die Betriebsdauer der Eindampfanlage zu erhöhen. Außerdem soll durch die Erfindung eine Vorrichtung zur Durchführung des Verfahrens geschaffen werden.

Dieses Ziel erreicht die Erfindung bei dem im Oberbegriff des Anspruchs 1 vorausgesetzten Verfahren durch die im kennzeichnenden Teil angegebenen Merkmale.

Der Erfindung liegt die Erkenntnis zugrunde, daß mit zunehmender Reinigung bzw. mit abnehmender Belegung der Verdampferoberfläche auf der Verdampfungsseite zugleich eine Änderung der Druckdifferenz zwischen der Heizdampfseite und der Verdampfungsseite auftritt, und daß damit einhergehend auch eine Änderung der Temperaturdifferenz zwischen der Heizdampfseite und der Verdampfungsseite verbunden ist. Sowohl die Druck- als auch die Temperaturdifferenzenverminderung kann daher als ein Maß für den Verlauf der Reinigung herangezogen werden.

Wenn sich beispielsweise die Druckdifferenz nicht mehr ändert, weil sich die Verdampferoberfläche wieder in einem sauberen Zustand befindet, kann die Reinigung der Eindampfanlage sofort beendet werden. Dies gilt ebenso, wenn sich die Temperaturdifferenz bei abnehmender Belegung an der Verdampferoberfläche -durch die Verbesserung der Wärmeübertragung -nicht mehr ändert. Auch dies ist somit ein Kriterium dafür, den Reinigungsvorgang zu beenden.

Der erfindungsgemäße Gedanke, durch fortlaufende Messung der Druck-und/oder Temperaturdifferenz ein Maß für den Verlauf der Reinigung zu gewinnen, schafft erstmals die vorteilhafte Möglichkeit, ein Kriterium bzw. eine zuverlässige Rückmeldung aus der Eindampfanlage darüber zu erhalten, daß die Reinigung abgeschlossen ist und beendet werden kann. Von entscheidender Bedeutung ist dabei, daß für diese Rückmeldung eine optische Kontrolle durch das Betriebspersonal nicht erforderlich ist.

Der wirtschaftliche Gesichtspunkt der Erfindung ist sehr bedeutend. Da erstmals ein zuverlässiges Kriterium über das Ende des Reinigungsprozesses vorliegt, wird vermieden, daß die Zeitdauer der Reinigung unnötig lang bemessen wird. Im Gegensatz zu dem eingangs geschilderten manuellen Reinigungsverfahren ist es vielmehr möglich, den Reinigungsvorgang sofort zu unterbrechen, wenn sich auf der Verdampferoberfläche kein Belag mehr befindet. Somit wird durch die Erfindung eine bedeutsame Vergrößerung der nutzbaren Betriebsdauer der Eindampfanlage erzielt.

Es ist darauf hinzuweisen, daß man generell bei Eindampfanlagen schon Messpunkte vorgesehen hat, um den Druck oder die Temperatur an bestimmten Stellen zu messen. Allerdings hat man die ermittelten Messwerte bisher lediglich im Rahmen einer Gesamtüberwachung der Anlage bzw. der einzelnen Stufen zur Überwachung und Kontrolle des Betriebes der Eindampfanlage herangezogen. Demgegenüber beschreitet die Erfindung den neuen Weg, für ein Verfahren zum intermittierenden Reinigen von Eindampfanlagen die Messwerte gezielt auszunutzen, und zwar keine absoluten Werte, sondern die Druck-oder Temperaturdifferenzenveränderungen. Durch diesen Schritt wird erstmals mit einfachen Mitteln eine wirtschaftliche Reinigung der Eindampfanlagen unter Vermeidung von Totzeiten ermöglicht.

Das vorteilhafte Anwendungsgebiet der Erfindung erstreckt sich auf alle Typen von Eindampfanlagen und ist unabhängig davon, ob diese mit oder ohne Brüdenverdichter betrieben werden. Ebenso spielt es auch keine Rolle, ob ein mechanischer oder ein thermischer Brüdenverdichter eingesetzt wird, oder ob ein organischer Rankine-Kreisprozeß (ORC) mit Kompressoren für das organische Kreislaufmedium zur Anwendung kommt. Der grundlegende Gedanke, die Druck-und/oder Temperaturdifferenz zwischen der Heizdampfseite und der Verdampfungsseite zu messen und als Kriterium für die Reinigung heranzuziehen findet in jedem Fall seine Anwendung.

Für den Fall, daß ein Brüdenverdichter zur Anwendung kommt, wird die Druck-und/oder Temperaturdifferenz in zweckmäßiger Ausgestaltung der Erfindung zwischen der Saug-und der Druckseite des Brüdenverdichters gemessen.

Bei Einsatz eines thermischen Brüdenverdichters ist es dabei vorteilhaft, die Energiezufuhr bzw. den die Heizleistung repräsentierenden Treibdampfdruck in Abhängigkeit der Verminderung der Druck-oder Temperatur differenz zu reduzieren. Dies bedeutet gegenüber dem bekannten manuellen Reinigungsverfahren, bei welchem der Treibdampfdruck konstant gehalten wird, eine bedeutsame Energieeinsparung.

Auch bei Verwendung eines mechanischen Brüdenverdichters besteht die Möglichkeit der vorteilhaften Energieeinsparung, wenn in anderer zweckmäßiger Ausgestaltung der Erfindung auch hier die Energiezufuhr bzw. die die Heizleistung repräsentierende Drehzahl des Elektromotors des mechanischen Brüdenverdichters in Abhängigkeit der Verminderung der Druck-oder Temperaturdifferenz reduziert wird.

In beiden Fällen ist es von Vorteil, den Treibdampfdruck bzw. die Drehzahl nur soweit zu reduzieren, daß dadurch die Verminderung der Druck-oder Temperaturdifferenz nicht zusätzlich beeinflußt wird.

Zur Durchführung des neuen Verfahrens wird gemäß der Erfindung eine Vorrichtung geschaffen, die gekennzeichnet ist durch a) an der Heizdampfseite und der Verdampfungsseite angeordnete Sensoren zur Druck-oder Temperaturmessung und durch b) ein Prozeßsteuerungs gerät -vorzugsweise ein Mikroprozessor -zur Auswertung der Änderung der Druck-oder Temperaturdifferenz.

Um die beschriebene zur Energieeinsparung führende Veränderung der Heizleistung durchführen zu können, ist bei der neuartigen Vorrichtung eine Einstellvorrichtung vorgesehen, welche es erlaubt, die Energiezufuhr in Abhängigkeit der Druck-bzw. der Temperaturdifferenzenänderung zu verändern. Bei Verwendung eines thermischen Brüdenverdichters wird die Einstellvorrichtung in vorteilhafter Weise durch ein Feinstellventil gebildet.

Um nach einer vorangegangenen Arbeitsweise der Eindampfanlage in der eigentlichen Betriebsfunktion den Reinigungsvorgang einzuleiten, ist eine Einschaltvorrichtung vorgesehen. Jetzt wird also Reinigungsflüssigkeit eingebracht, und außerdem werden die erwähnten Druck-und/oder Temperaturdifferenz-Messungen vorgenommen, wobei die gemessenen Werte in dem Prozeßsteuerungsgerät ausgewertet werden.

Ferner umfaßt die neue Vorrichtung eine automatische Umschaltvorrichtung zur Beendigung der Reinigungsphase, so daß dann, wenn sich die Druck-und/oder Temperaturdifferenzen nicht mehr ändern, der Reinigungsvorgang automatisch beendet und wieder auf normalen Betrieb umgeschaltet werden kann.

Andere zweckmäßige Ausgestaltungen und Weiterbildungen der Erfindung sind Gegenstand der Unteransprüche und der Zeichnung zu entnehmen.

Nachfolgend wird die Erfindung zum besseren Verständnis anhand der Zeichnung beispielhaft erläutert. Es zeigen:

Fig. 1 eine schematische Darstellung einer Verdampferstufe mit einem Heizrohr, dessen Verdampferoberfläche von einem Belag gereinigt werden soll,

Fig. 2 ein Diagramm zur Darstellung der unterschiedlichen Druck-und Temperaturwerte auf der Heizdampfseite und der Verdampfungsseite,

Fig. 3 eine vereinfachte Darstellung einer einstufigen Eindampfanlage mit einem mechanischen Brüdenverdichter,

Fig. 4 eine Darstellung gemäß Fig. 3, jedoch mit einem thermischen Brüdenverdichter,

Fig. 5 eine mehrstufige Eindampfanlage ohne Brüdenverdichter,

Fig. 6 ein Diagramm zur Verdeutlichung der erzielbaren Einsparung bei Verwendung eines mechanischen Brüdenverdichters,

Fig. 7 ein Diagramm zur Verdeutlichung des optimalen Arbeitspunktes bei einem thermischen Brüdenverdichter,

Fig. 8 ein Prinzip-Blockschaltbild einer Schaltungsanordnung zur Durchführung des Reinigungsverfahren.

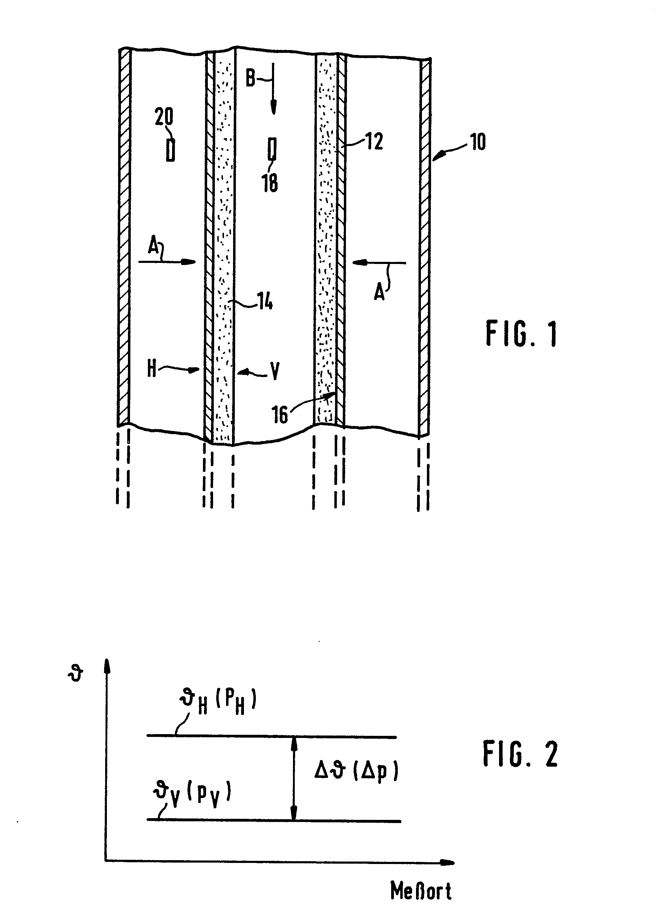

In Fig. 1 ist in teilweiser Querschnittsansicht - schematisch eine Verdampfungsstufe 10 einer Eindampfanlage dargestellt. Innerhalb der Verdampfungsstufe 10 befindet sich ein Heizrohr 12, durch welches im normalen Betrieb eine Flüssigkeit -z.B. Milch -geführt wird, die eingedampft werden soll. Auf der Heizdampfseite H wird Produktdampf - (Brüden) zugeführt, so daß das Heizrohr 12 -wie durch die Pfeile A angedeutet ist -unter der Einwirkung des Produktdampfes steht. Unter dessen Einwirkkung erfolgt eine Wärmetransport durch die Wandung des Heizrohres 12. Dies wird wiederum zur Aufkonzentrierung der Flüssigkeit genutzt, so daß die Flüssigkeit auf der Verdampfungsseite V aufkonzentriert werden kann.

Nach längerer Betriebsdauer bildet sich nun auf der Verdampferoberfläche 16 des Heizrohres 12 ein Belag 14, der durch den Reinigungsvorgang wieder entfernt werden muß. Durch den Pfeil B ist in Fig. 1 angedeutet, daß zu diesem Zweck an Stelle der einzudampfenden Flüssigkeit eine Reinigungsflüssigkeit in das Heizrohr 12 eingebracht wird. Der Heizdampf (Pfeil A) ist nach wie vor vorhanden.

In Fig. 2 sind bei einem schmutzigen Heizrohr 12 mit dem Belag 14 die Temperatur $\vartheta_H$ bzw. der Druck $p_H$ auf der Heizdampfseite sowie auf der Verdampfungsseite ($\vartheta_V$ bzw. $p_H$) aufgetragen. Wie zu erkennen ist, liegt (wegen des Wärmewiderstandes) die Temperatur auf der Heizdampfseite höher als die Temperatur auf der Verdampfungsseite, so daß sich eine Temperatur differenz $\Delta\vartheta$ (bzw. eine Druckdifferenz $\Delta p$) ergibt.

Der Einfachheit halber wird nachfolgend nur noch der jeweilige Druck p bzw. die Druckdifferenz $\Delta p$ betrachtet, wobei darauf hinzuweisen ist, daß die Änderungen dieser Werte entsprechend auch bezüglich der Temperatur auftreten.

Der Druck auf der Heizdampfseite H und auf der Verdampfungsseite V wird jeweils an den - schematisch dargestellten Meßstellen 18 und 20 gemessen, und es wird dann die Druckdifferenz $\Delta p$ ermittelt. Mit fortschreitender Reinigung, wenn also der Belag 14 auf der Verdampferoberfläche abnimmt, ändert sich die Druckdifferenz zwischen der Heizdampfseite H und der Verdampfungsseite V - (dies gilt auch für die Temperaturdifferenz), und diese Druckdifferenzenverminderung wird als ein Maß für den Verlauf der Reinigung herangezogen. Wenn sich die Druckdiffe renz nicht mehr ändert, weil sich die Verdampferoberfläche 16 des Heizrohres 12 wieder in einem sauberen Zustand befindet, kann die Reinigungsphase automatisch beendet werden.

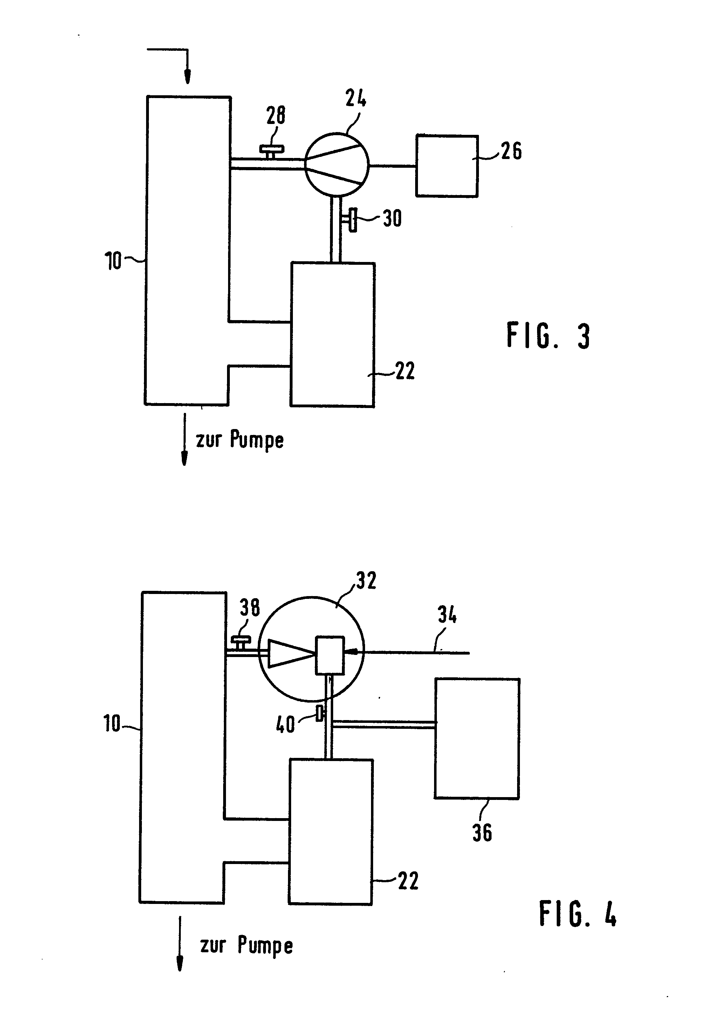

Fig. 3 zeigt als Ausführungsbeispiel die vereinfachte Darstellung einer einstufigen Eindampfanlage mit einem mechanischen Brüdenverdichter 24, der mit einem Elektromotor 26 sowie mit einem Abscheider 22 verbunden ist. Die für die Erfindung wesentliche Ermittlung der Druckdifferenz bzw. der Veränderung der Druckdifferenz erfolgt hier an den Meßstellen 28 und 30 auf Druck-bzw. Saugseite des Brüdenverdichters 24.

Analog wird in Fig. 4 verfahren, die eine einstufige Eindampfanlage mit einem thermischen Brüdenverdichter 32 zeigt, welcher mit dem Abscheider 22 verbunden ist. Zusätzlich ist an die Verbindungsleitung ein Kondensator 36 angeschlossen. Über die Leitung 34 wird in an sich bekannter Weise Treibdampf zugeführt. Die Meßstellen 38 und 40 für die Ermittlung und anschließende Auswertung der Druckdifferenz (bzw. der Temperaturdifferenz) befinden sich auch hier auf der Druck-bzw. Saugseite des Brüdenverdichters 32.

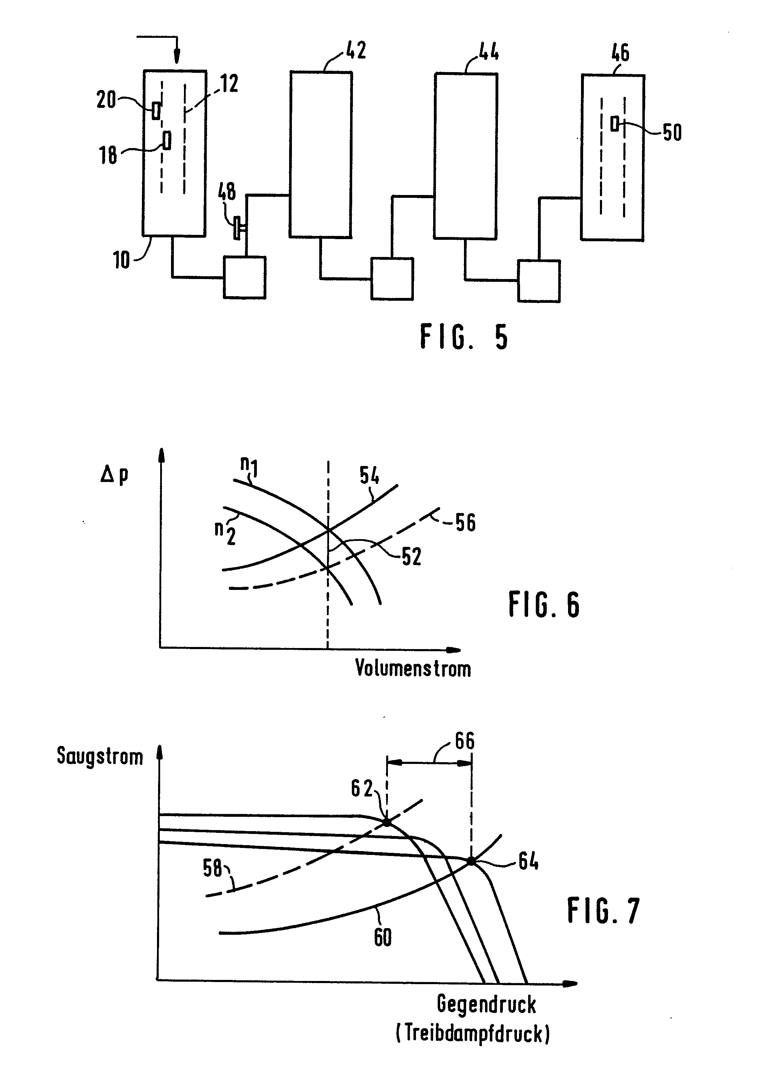

Der erfindungsgemäße Gedanke ist nicht nur bei einstufigen Eindampfanlagen realisierbar, sondern läßt sich ebenso auch bei mehrstufigen Eindampfanlagen verwirklichen. In Fig. 5 ist als weiteres Beispiel eine mehrstufige Eindampfanlage ohne Brüdenverdichter dargestellt.

Die gezeigte Eindampfanlage umfaßt vier Verdampfungsstufen 10, 42, 44 und 46. Ein besonderer Vorteil der Erfindung besteht nun darin, daß die erforderlichen Druck-und/oder Temperaturmessungen an unterschiedlichen Stellen und über mehrere Verdampfungsstufen erfolgen können. So sind in Fig. 5 neben den Meßstellen 18 und 20 schematisch zwei weitere Meßstellen 48 und 50 vorgesehen. Eine Möglichkeit besteht beispielsweise darin, die Meßwerte der Meßstelle 20 auf der Heizdampfseite der Verdampfungsstufe 10 sowie der Meßstelle 50 auf der Verdampfungsseite der Verdampfungsstufe 46 zur Ermittlung der Druckdifferenzenverminderung im Verlauf der Reinigungsphase heranzuziehen.

Vorzugsweise wird die Druck-oder Temperaturdifferenz über solche benachbarte Verdampferstufen gemessen, die besonders verschmutzungsempfindlich sind.

Neben dem positiven Aspekt der automatischen Beendigung der Reinigungsphase zu oder nach einem Zeitpunkt, an dem sich die Druckdifferenz (bzw. die Temperaturdifferenz) nicht mehr ändert, kommt bei der Erfindung noch ein weiterer bedeutsamer Gesichtspunkt zum Tragen, der eine deutliche Energieeinsparung während der Reinigungsphase ermöglicht.

Es ist zwar schon bekannt, während der Reinigung mit einer verringerten Verdampfungsleistung auf der Heizdampfseite H zu arbeiten, jedoch wurde diese einmal vorgegebene verringerte Verdampfungsleistung über den gesamten Reinigungsvorgang konstant gehalten.

Demgegenüber ist es bei der Erfindung möglich, die Energiezufuhr während der Reinigungsphase in Anpassung an den jeweiligen Reinigungszustand weiter zu verringern und den Brüdenverdichter somit immer in einem optimalen Betriebspunkt zu fahren.

Hierzu zeigt das Diagramm in Fig. 6 unter Bezugnahme auf den mechanischen Brüdenverdichter 24 (vgl. Fig. 3) die Abhängigkeit des Volumenstromes in Abhängigkeit von der Druckdifferenz bei unterschiedlichen Drehzahlen $n_1$ und $n_2$ des Gebläses 26. Die Kurven 54 und 56 geben die Anlagenkennlinie wieder, wobei die Kurve 54 für den schmutzigen Zustand und die Kurve 56 für den sauberen gereinigten Zustand gilt.

$n_1$ ist größer $n_2$, d.h. bei der sauberen Anlage wird weniger Energie benötigt. Das Einsparungspotential ist in Fig. 6 durch den Abschnitt 52 angedeutet. Da bei der Erfindung die Druckdifferenz laufend gemessen und die Druckdifferenzenverminderung fortlaufend ausgewertet wird, ist es somit möglich, während der Reinigungsphase in Anpassung an den jeweiligen Reinigungszustand die Energiezufuhr -hier also die Drehzahl n -zu reduzieren, wodurch eine deutliche Energieeinsparung während der Reinigungsphase erzielt wird.

Anhand von Fig. 7 wird nachfolgend erläutert, daß auch bei Verwendung eines thermischen Brüdenverdichters 32 (vgl. Fig. 4) in vergleichbarer Weise eine Energieeinsparung erzielt werden kann. Das Diagramm zeigt den Verlauf des Saugstromes in Abhängigkeit von dem Gegendruck, der mit zunehmender Verschmutzung des Heizrohres 12 anwächst. Ferner sind die Anlagenkennlinien 58 für den sauberen Zustand und 60 für den schmutzigen Zustand dargestellt. Somit ergibt sich im sauberen Zustand ein Arbeitspunkt 62 und im schmutzigen Zustand der Arbeitspunkt 64.

Mit zunehmender Reinigung bzw. mit abnehmender Belegung der Verdampferoberfläche 16 verringert sich der Gegendruck, und dementsprechend kann bei der Erfindung auch die Energiezufuhr zum Brüdenverdichter verringert werden. Das erzielbare Einsparpotential ist in Fig. 7 durch den Abschnitt 66 angedeutet.

Wie man sieht, gibt die Druckdifferenzenverminderung (bzw. die Temperaturdifferenzenverminderung) nicht nur ein Maß für den Verlauf der Reinigung der Eindampfanlage, vielmehr lassen sich die Meßwerte auch mit besonderem Vorteil heranziehen, um die Energiezufuhr während der Reinigungsphase selbst zu verringern und somit Energie einzusparen.

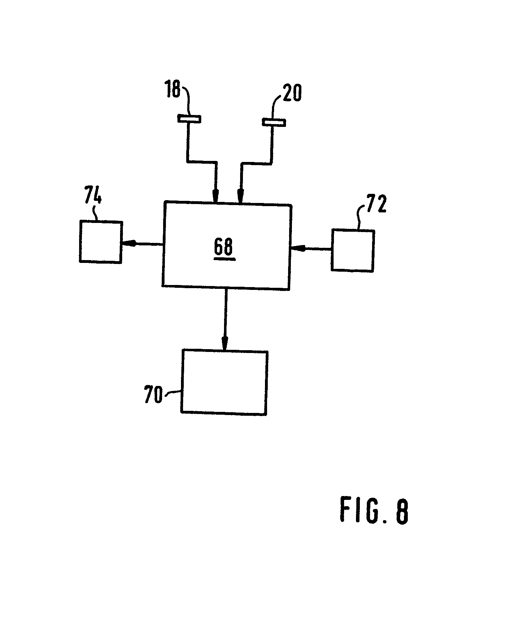

In Fig. 8 ist ein Blockschaltbild einer Vorrichtung zur Durchführung des erfindungsgemäßen Verfahrens dargestellt. Die beiden Meßstellen 18 und 20 (vgl. Fig. 1) führen zu einem Prozeßsteuerungsgerät 68, welches die Druck-oder Temperaturdifferenzenverminderung auswertet. Für die Messung der Drücke bzw. der Temperaturen werden hier nicht näher dargestellte Sensoren verwendet. Für das Prozeßsteuerungsgerät 68 läßt sich mit Vorteil ein Mikroprozessor einsetzen.

Das Prozeßsteuerungsgerät 68 ist mit einer Einstellvorrichtung 70 verbunden, die die Aufgabe hat, die zuvor beschriebene Reduzierung der zugeführten Energie während der Reinigungsphase zu bewirken. Die entsprechenden Einstellungen selbst können in an sich bekannter Weise, z.B. mittels Ventile erfolgen.

Die Einstellvorrichtung 70 wird von dem Prozeßsteuerungsgerät 68 angesteuert, so daß die Reduzierung der Energiezufuhr in Abhängigkeit der auftretenden Druck-oder Temperaturdifferenzenverminderung erfolgt.

Die Vorrichtung besitzt ferner eine Einschaltvorrichtung 72, um die Reinigungsphase bei einer Eindampfanlage einleiten zu können. Außerdem ist noch eine Umschaltvorrichtung 74 vorgesehen, die von dem Prozeßsteuerungsgerät 68 angesteuert wird.

Mittels der Umschaltvorrichtung 74 kann die Eindampfanlage nach Beendigung der Reinigungsphase wieder auf den normalen Betrieb umgeschaltet werden, wenn keine Druck-oder Temperaturdifferenzenverminderung mehr auftritt. Die eigentliche Umschaltung auf die normale Betriebsfunktion kann ebenfalls in an sich bekannter Weise erfolgen.

## Ansprüche

1. Verfahren zum intermittierenden Reinigen von Eindampfanlagen für Flüssigkeiten (z.B. Milch), insbesondere zur Reinigung von Eindampfanlagen mit einem Brüdenverdichter (Brüdenkompressor), wobei der Belag auf der zu reinigenden Verdampferoberfläche während der Reinigungsphase mit einer Reinigungsflüssigkeit entfernt wird, die in die Anlage eingebracht wird, und die an Stelle der normalerweise einzudampfenden Flüssigkeit durch die Eindampfanlage geleitet und auch aufkonzentriert wird, wobei vorzugsweise mit verringerter Verdampfungsleistung gearbeitet wird, dadurch gekennzeichnet, daß die Druck-und/oder Temperaturdifferenz über eine oder mehrere Verdampferstufen zwischen der Heizdampfseite und der Verdampfungsseite gemessen wird, und daß die Reinigung in Abhängigkeit von der Änderung der Druck-und/oder Temperaturdifferenz automatisch beendet wird.

2. Verfahren nach Anspruch 1, dadurch gekennzeichnet, daß die Reinigung etwa dann automatisch beendet wird, wenn sich die Druckdifferenz oder die Temperaturdifferenz nicht mehr ändert.

3. Verfahren nach Anspruch 1 oder 2, dadurch gekennzeichnet, daß die Druck-oder Temperaturdifferenz über eine oder mehrere benachbarte Verdampferstufen gemessen wird, die besonders verschmutzungsempfindlich sind.

4. Verfahren nach einem der vorhergehenden Ansprüche 1 -3, dadurch gekennzeichnet, daß die Druck-oder Temperaturdifferenz über diejenigen Verdampfungsstufen gemessen wird, die in den Energiekreislauf einer Brüdenverdichtung einbezogen sind.

5. Verfahren nach einem der vorhergehenden Ansprüche 1 -4, dadurch gekennzeichnet, daß bei Verwendung eines Brüdenverdichters die Druckdifferenz zwischen dessen Saug-und Druckseite gemessen wird.

6. Verfahren nach einem der vorhergehenden Ansprüche 1 -5, dadurch gekennzeichnet, daß bei Verwendung von Brüdenverdichtern die Energiezufuhr zu den Brüdenverdichtern in Abhängigkeit von der in Folge des Reinigungseffektes abnehmenden Druck-oder Temperaturdifferenz vermindert wird.

7. Verfahren nach einem der vorhergehenden Ansprüche 1 -3, dadurch gekennzeichnet, daß bei Anwendung eines organischen Rankine-Kreisprozesses (ORC) die Differenz der Drücke auf der Saug-und auf der Druckseite der Kompressoren für das organische Kreislaufmedium oder die Differenz der Temperaturen auf der Heizseite der ersten und auf der Verdampfungsseite der letzten derjenigen Verdampferstufen gemessen wird, die in den Energiekreislauf über den Rankine-Kreislaufprozeß einbezogen sind.

8. Verfahren nach Anspruch 7, dadurch gekennzeichnet, daß bei Anwendung eines organischen Rankine-Kreisprozesses (ORC) die Energiezufuhr zu den Kompressoren für das organische Kreislaufmedium in Abhängigkeit von der in Folge des Reinigungseffektes abnehmenden Differenz der Drücke auf der Saug-und auf der Druckseite der Kompressoren für das organische Kreislaufmedium oder in Abhängigkeit von der Differenz der Temperaturen auf der Heizseite der ersten und auf der Verdampfungsseite der letzten derjenigen Verdampferstufen vermindert wird, die in den Energiekreislauf über den Rankine-Kreisprozeß einbezogen sind.

9. Verfahren nach einem der vorhergehenden Ansprüche 1 -8, dadurch gekennzeichnet, daß die Druck-oder Temperaturmessungen mittels Sensoren mit digitalen Ausgangssignalen erfolgt, und daß die Auswertung der Druckdifferenz bzw. der Temperaturdifferenz mit einem Prozeßsteuerungsgerät - vorzugsweise Mikroprozessor -vorgenommen wird, das mit seinem Ausgangssignal einen Regler für die Energiezufuhr ansteuert.

10. Verfahren nach Anspruch 9, <u>dadurch gekenn zeichnet</u>, daß das Prozesssteuerungsgerät nach jeweils einem von mehreren Programmen betrieben werden kann, welche die unterschiedlichen Anforderungen an den Ablauf der Reinigungsphase -z.B. bei abwechselnder Eindampfung von verschiedenen Flüssigkeiten -erfüllen.

11. Vorrichtung zur Durchführung des Verfahrens nach einem oder mehreren Ansprüche 1 -10, <u>gekennzeichnet durch</u>

a) an der Heizdampfseite und der Verdampfungsseite angeordnete Sensoren zur Druck-oder Temperaturmessung und

b) ein Prozesssteuerungsgerät, vorzugsweise ein Mikroprozessor, zur Auswertung der Änderung der Druck-oder Temperaturdifferenz.

12. Vorrichtung nach Anspruch 11, <u>dadurch gekennzeichnet</u>, daß eine an das Prozesssteuerungsgerät angeschlossene Einstellvorrichtung zur Veränderung der Energiezufuhr in Abhängigkeit von der Druck-bzw. der Temperaturdifferenzenänderung vorgesehen ist.

13. Vorrichtung nach Anspruch 12, <u>dadurch gekennzeichnet</u>, daß bei Verwendung von Brüdenverdichtern oder eines organischen Rankine-Kreisprozesses eine Einstellvorrichtung zur Verringerung der Energiezufuhr zu den Brüdenverdichtern bzw. den Kompressoren für das organische Kreislaufmedium vorgesehen ist.

14. Vorrichtung nach einem der vorhergehenden Ansprüche 1 -13, <u>dadurch gekennzeichnet</u>, daß eine Einschaltvorrichtung zur Einleitung der Reinigungsphase vorgesehen ist.

15. Vorrichtung nach einem der vorhergehenden Ansprüche 11 -14, <u>dadurch gekennzeichnet</u>, daß eine automatische Umschaltvorrichtung zur Beendigung der Reinigungsphase vorgesehen ist.

FIG. 1

FIG. 2

FIG. 3

FIG. 4

FIG. 5

$\Delta p$

$n_1$

54

$n_2$

56

52

Volumenstrom

FIG. 6

Saugstrom

66

62

64

58

60

Gegendruck
(Treibdampfdruck)

FIG. 7

FIG. 8